# EUROPEAN PATENT APPLICATION

(11) **EP 4 847 423 A1**
(43) Date of publication of application: **02.12.2026**
(21) Application number: 25382530.1
(22) Date of filing: 27.05.2025
(51) Int. Cl.: B65G 29/02, B65G 47/24, B65G 47/32, B65G 47/84, B65G 47/90

(54) **MACHINE AND METHOD FOR AUTOMATICALLY POSITIONING OBJECTS**

(71) Applicant: Posimat, SA, 08210 Barberà del Vallès (ES)
(72) Inventor: MARTÍ MERCADE, Alex, 08190 Sant Cugat del Vallès (ES)
(74) Representative: Torner, Juncosa I Associats, SL

(57) **Abstract**

A machine for automatically positioning objects, comprising at least one inlet conveyor (10); at least one transfer device (20) comprising a plurality of transfer fasteners (22), which rotate about a rotation axis (A1) inclined with respect to the horizontal, between an upper receiving region (R1) and a lower delivery region (R2); at least one outlet conveyor (30) adjacent to the lower delivery region (R2); at least one robotic collection device (11) with a pick-up head (12) rotatable about a vertical axis (A2) to deliver the object to a transfer fastener (22) located in the upper receiving region (R1); wherein each transfer device (20) comprises several sectors (21) concentric with the same rotation axis (A1), each sector (21) including at least one transfer fasteners (22) and being independently actuated by an actuator (24) capable to produce a variable non-constant rotational speed.

## Description

### Technical field

The present invention is directed to a machine and a method for automatically positioning objects by means of at least one robotic collection device in cooperation with at least one transfer device, each transfer device comprising several independently actuated transfer fasteners rotating around an inclined rotation axis, producing a change on the orientation of the objects transferred by the transfer device from a lying orientation to an upright orientation.

The present invention is especially suited to handle bottles of any size, shape and with external superficial decoration, in particular plastic bottles as well as for positioning bottle caps.

### Background of the Invention

Machines for automatically positioning objects are known.

Those known machines include one inlet conveyor, one outlet conveyor, one transfer device located between the inlet conveyor and the outlet conveyor for changing the orientation of the objects from a lying orientation to an upright orientation, and a robotic collection device intended to pick-up objects from the inlet conveyor, and delivery such objects to the transfer device with a predefined target direction while still in the lying orientation.

For example, documents EP20785484 and WO2022034249A1 each describe one of those machines, in which the transfer device is a conveyor with a plurality of transfer fasteners attached thereto, all the transfer fasteners of the same transfer device moving at the same speed which is the same for receiving and for delivering objects, limiting the output speed of the machine.

Document EP3768622B1 also describes one of those machines, but in which the transfer device comprises a conveyor including multiple transfer carriers independently moved though magnetic induction along a track, which is an expensive and challenging solution with a high maintenance cost.

The present invention solves the above and other problems.

### Description of the Invention

The present invention concerns, according to a first aspect, to a machine for automatically positioning objects, as defined in claim 1.

The proposed machine comprises at least one inlet conveyor configured to transport a plurality of objects in a lying orientation.

The lying orientation describes a spatial arrangement where the longest axis of the objects is approximately horizontal. This is the orientation in which the center of gravity -the point where the object's mass is effectively concentrated- is positioned at its lowest possible height relative to the supporting surface. In this orientation, the object is typically stable minimizing the tendency to tip or rotate. Therefore, this is the orientation that will naturally be adopted by the vast majority of objects randomly dumped onto the inlet conveyor.

The lying orientation is opposed to the upright orientation which describes a spatial arrangement where the longest axis of the object is approximately vertical.

The proposed machine further comprises at least one transfer device, each transfer device comprising a plurality of transfer fasteners. The transfer fasteners are fasteners designed to hold an object secured thereto during transport.

The transfer device rotates about a rotation axis inclined with respect to the horizontal, between an upper receiving region, where the transfer fasteners are in a lying orientation intended to receive the objects in the lying orientation, and a lower delivery region, where the transfer fasteners are in an upright orientation intended to deliver the objects in an upright orientation. The rotation of the transfer fasteners about the inclined rotation axis produces a change in the orientation of the transfer fasteners between the lying orientation and the upright orientation.

The machine also comprises at least one outlet conveyor adjacent to the lower delivery region of the transfer device for receiving the objects released from the transfer device in the upright position, obtaining an aligned sequence of objects in the upright orientation conveyed by the outlet conveyor. The inlet conveyor and the outlet conveyor can be, for example, parallel to each other and can move in the same or in opposed directions.

The outlet conveyor can convey the aligned succession of objects in the upright orientation to additional stations of a fabrication line. When the objects are receptacles, the additional stations can be, for example, a cleaning station, a labelling station, a filling station, a sterilizing station, a sealing station, an inspection station and/or a packaging station.

The machine comprises at least one robotic collection device with a pick-up head rotatable about a vertical axis. Each robotic collection device is configured to collect the objects in the lying position from the inlet conveyor with the pick-up head, to rotate the objects along the vertical axis by rotating the pick-up head holding the object to reach a target direction, and to deliver the object to one transfer fastener of the at least one transfer device located in the upper receiving region.

The direction of the object is the direction toward which the longest axis of the object points. Therefore, an object in the lying orientation can adopt infinite directions in all 360° while remaining in the lying orientation, but only one of those infinite directions is the target direction. According to the above, the robotic collection device takes the object located on the inlet conveyor in the lying orientation and with a random direction and rotates the object about the vertical axis until the object reaches the target orientation while maintaining the lying orientation.

Typically, the rotation of the object is produced simultaneously with the translation thereof by the robotic collection device from the pick-up position to the upper receiving region, where the object is released from the pick-up head and attached to the transfer fastener of the transfer device located at the upper receiving region at that moment.

The robotic collection device can be, for example, a segmented articulated arm with the pick-up head at its distal end or three articulated arms converging in the pick-up head.

Typically, the machine includes a detector system, with a camera facing the inlet conveyor and a control unit configured to analyse the images obtained by the camera to identify the position and direction of the objects transported on the inlet conveyor. With this information the system can identify a picking region of each object and to control the robotic collection device to the picking region to pick-up each individual object.

The system also determines the rotation around the vertical axis required for each individual object to reach the target direction and controls the robotic collection device to produce such rotation.

According to the proposed invention, each transfer device comprises several sectors concentric with the same rotation axis, each sector including at least one transfer fasteners and being independently actuated by an actuator capable to produce a variable non-constant rotational speed, enabling an independent control of the speed and position of each sector of the same transfer device, modifying the relative position between different transfer fasteners of the same transfer device.

The independent control of each sector, and therefore the independent control of the speed and/or position of different transfer fasteners of the same transfer device, allow the transfer device to be coordinated with the variable and unpredictable delivering of objects by the robotic collection device, which is affected by the random distribution of the objects on the inlet conveyor, with a constant output of objects to the outlet conveyor, in an optimized and accelerated manner.

Preferably, the actuators are configured to synchronize the position and/or speed of each transfer fastener with the position and/or speed of the pick-up head of the corresponding at least one robotic collection device when in the upper receiving region and/or with the position and/or speed of the at least one outlet conveyor when in the lower delivery region.

This independent control allows, for example, the faster fasteners to stop at the upper receiving region, to facilitate a more precise delivery of objects from the robotic collection device, while other faster fasteners of the same transfer device are in motion at the lower delivery region, typically at a speed coordinated with the outlet conveyor.

This coordination can be achieved, for example, through a shared control unit connected to both the transfer device and the robotic collection device.

Each transfer fastener, and/or each pick-up head, can include, for example, at least two opposed grippers selectively movable towards and away from each other, between a closed position in which the object is retained between the grippers and an open position in which the object is released. An actuator, such an electric motor or a mechanical actuator actuated through a cam, opens and closes the grippers at intended moments, in coordination with the angular position of the transfer fastener and/or in coordination with the movement of the collection robotic device.

Alternatively, each transfer fastener and/or each pick-up head can include, for example, at least one vacuum cup connected to a suction source, such an air pump. The suction source produces a partial vacuum inside the vacuum cup, providing retention of the object against the mouth of the vacuum cup when deposited thereon. When the object has to be released, the vacuum is removed from the inside of the vacuum cup, for example by selectively interrupting the connection with the suction source for example through a valve, by stopping the suction source or by allowing the free entrance of air into the vacuum cup for example through a selectively openable valve. According to one embodiment, the valve selectively interrupting the connection with the suction source can be an annular opening of the suction chamber, concentric with the rotation axis, with an interrupted angular portion. Said interruption of the annular opening interrupts the connection with the suction chamber when a sector of the transfer device is in an angular position coincident with the interrupted angular portion of the annular opening.

Alternativelly, each transfer fastener and/or each pick-up head can be at least one elastically compressible vacuum cup connected to a valve configured to allow air to escape from inside the vacuum cup when there is air overpressure inside the vacuum cup, produced by the compression of the vacuum cup against the object to be retained. The valve can be in a closed position, preventing air from entering the vacuum cup through the valve, or can be open, freely allowing the entrance of air into the vacuum cup. Said valve can be a single valve or a combination of two valves, such a one-way valve and one selectively openable valve.

According to the above, the valve will be selectively positioned in the closed position when an object has to be retained by the vacuum cup. In this closed position, the valve acts as a one-way valve, and when the elastically compressible vacuum cup is compressed against the object to be picked up the vacuum cup is compressed expelling the air from its inside through the valve. When the compression disappears, the compressed vacuum cup tries to expand and, since no air can enter through the valve, a partial vacuum is created in the vacuum cup retaining the object against the mouth of the vacuum cup without requiring an active vacuum source. When the object must be released, the valve is selectively set to open allowing the entrance of air inside the vacuum cup releasing the object.

The valve can be set to open or close for example by means of a cam or a pusher located in different positions along the rotation path of the transfer device, which interact with the valve when it is in different positions along its path, automatically changing its setting from open to closed when it reaches those positions. Alternatively said valve can be actuated through an electric controller in coordination with the movement of the robotic collection device.

The present invention concerns, according to a second aspect, to a method for automatically positioning objects, as defined in claim 13.

The proposed method comprises the following steps:
providing a plurality of objects in a lying orientation on at least one inlet conveyor;
collecting the objects in the lying position from the inlet conveyor with a pick-up head of at least one robotic collection device and rotating the objects along a vertical axis to reach a target direction while maintaining the lying orientation;
delivering the objects with the target direction and the lying orientation to a transfer fastener located at an upper receiving region and attaching the objects to said transfer fastener;
changing the orientation of the objects attached to the transfer fasteners from the lying orientation to an upright orientation by rotating the transfer fastener about a rotation axis inclined with respect to the horizontal, between an upper receiving region and a lower delivery region,
releasing the objects from the transfer fasteners in the upright orientation when reaching the lower delivering region to at least one outlet conveyor adjacent to the lower delivery region.

In addition, the proposed method proposes to produce the change in the orientation of the objects by independently rotating several transfer fasteners concentric with the same rotation axis at a variable non-constant rotational speeds synchronizing the position and/or speed of each transfer fastener with the position and/or speed of the pick-up head of said at least one robotic collection device when in the upper receiving region and/or with the position and/or speed of the at least one outlet conveyor when in the lower delivery region.

All the transfer fasteners of the same transfer device will rotate about the rotation axis following the same circular path coplanar with a plane perpendicular to the rotation axis. All the transfer fasteners will rotate always in the same direction maintaining at all times its relative order.

Preferably, the transfer fasteners located in the upper receiving region are moved at a first speed higher than zero, or alternatively, those transfer fasteners are moved at a first speed equal to zero for a period, waiting for the delivery of the object from the robotic collecting device.

Meanwhile, the transfer fasteners located in the lower delivery region are moved at a constant second speed, synchronized with the constant speed of the at least one outlet conveyor adjacent thereto, simultaneously with the movement of the transfer fasteners at the first speed mentioned above.

In this manner, the transfer fasteners located at the lower delivery region can be moved at the second speed in coordination with the outlet conveyor while simultaneously other transfer fasteners of the same transfer device are moved at the first speed, which can be different from the second speed, typically slower than the second speed, or even can be equal to zero for a certain period of time to make easier the transfer of the objects from the robotic collection device.

Optionally, the method can include moving the transfer fasteners between the upper receiving region and the lower delivery region and/or between the lower delivery region and the upper receiving region a third speed higher than the second speed. This allows an increase in the output of the transfer device, since the accelerated speed of the transfer fasteners between the upper and lower regions can compensate for any delay in the delivery of the objects without affecting the regularity of the speed of the objects output to the outlet conveyor.

It will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a schematic perspective view of the machine according to a first embodiment in which the machine comprises one robotic collection device associated with one transfer device comprising three sectors, each sector with two transfer fasteners.

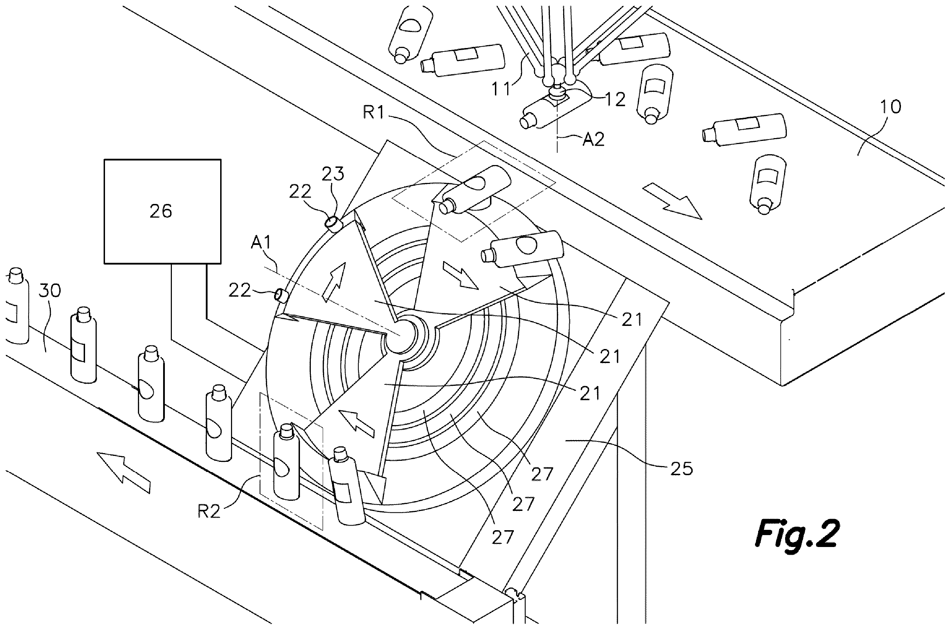

Fig. 2 shows a zoomed view of the transfer device shown in Fig. 1.

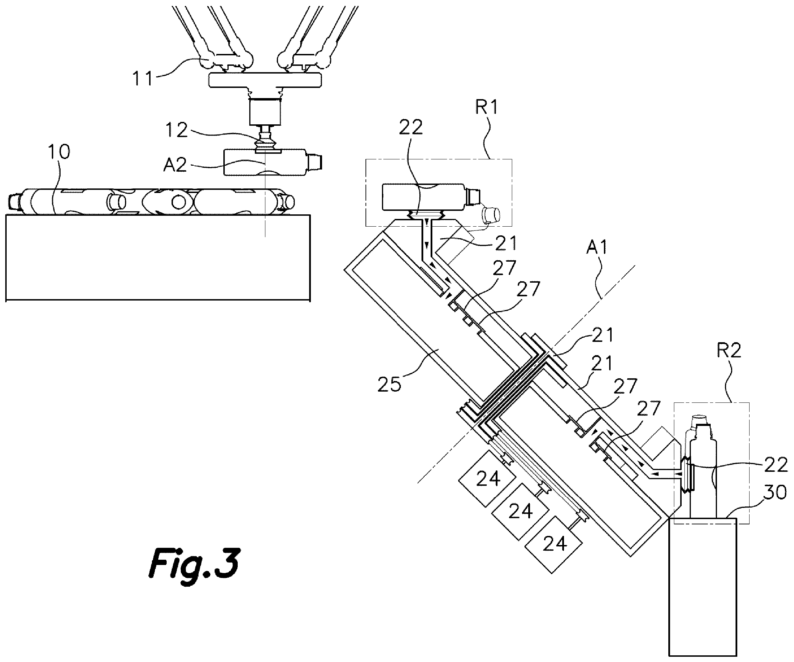

Fig. 3 shows a schematic vertical cross-section of one transfer device according to one second embodiment.

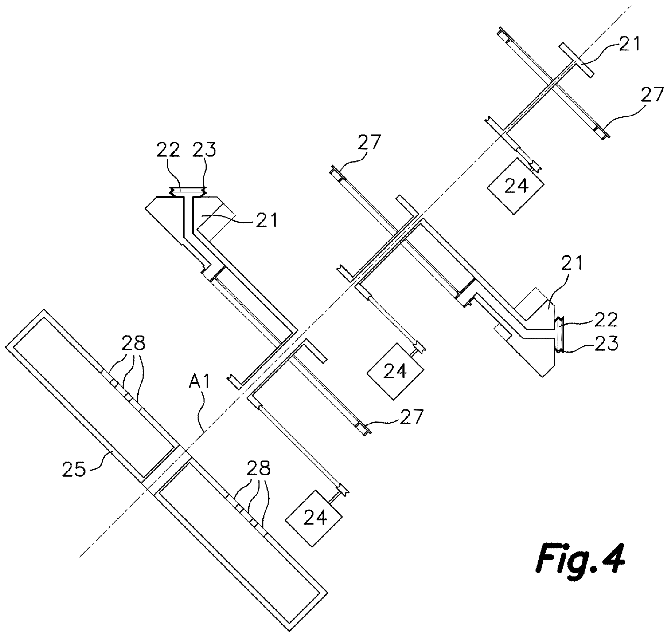

Fig. 4 shows an exploded view of the schematic vertical cross-section of the transfer device shown in Fig. 3.
Fig. 5 shows a schematic frontal view of the suction chamber of the transfer device, view perpendicularly to the rotation axis, according to one embodiment.
Fig. 6 shows a schematic cross-section of one transfer fastener, according to an embodiment in which the transfer fastener is one vacuum cup connected to a suction source.
Fig. 7 shows a schematic cross-section of one transfer fastener, according to an embodiment in which the transfer fastener is one vacuum cup which is not connected to a suction source but is connected to a one-way valve allowing the exit of air from the inside of the vacuum cup and to one selectively operable valve to selectively allow the entering of air therein.
Fig. 8 shows a schematic cross-section of one transfer fastener, according to an embodiment in which the transfer fastener comprises two opposed grippers.

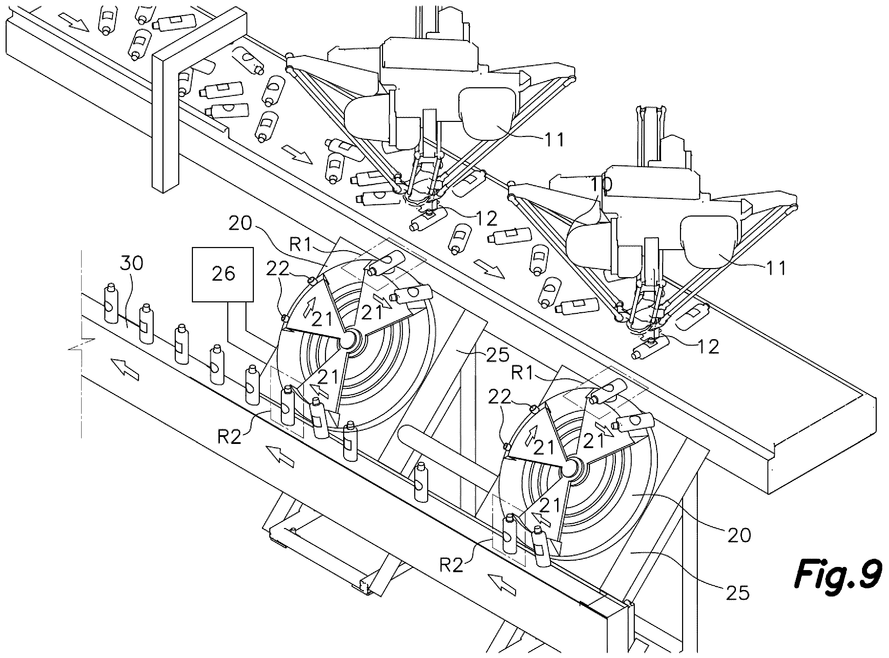

Fig. 9 shows a schematic perspective view of the machine according to a third embodiment in which the machine comprises two successive robotic collection devices, each associated with one transfer device comprising three sectors, each sector with two transfer fasteners.

### Detailed Description of the Invention and of particular embodiments

The proposed machine for automatically positioning objects comprises at least one inlet conveyor 10 configured to transport a plurality of objects in a lying orientation with at least one robotic collection device 11 associated therewith, at least one transfer device 20 with an upper receiving region R1 adjacent to the robotic collection device 11, and at least one outlet conveyor 30 adjacent to a lower delivery region R2 of the transfer device 20.

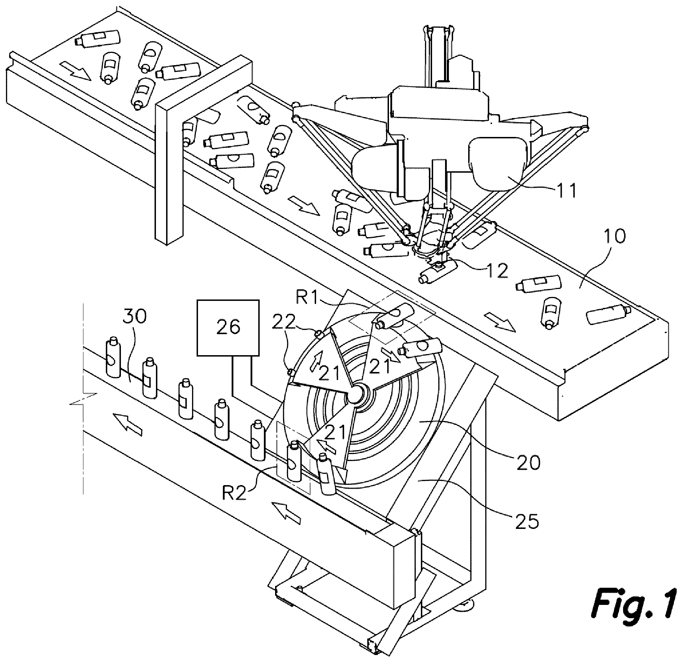

The machine can comprise, for example, only one robotic collection device 11 and only one transfer device 20 adjacent to each other, as shown in Fig. 1.

Alternatively, the machine can comprise only one robotic collection device 11 and two transfer devices 20 next to the robotic collection device 11, on opposed sides of the inlet conveyor 10.

According to another alternative embodiment, the machine can comprise successive robotic collection devices 11 along the inlet conveyor, for example two or three, each associated with one transfer device 20 located at one lateral side of the inlet conveyor, or with two transfer devices 20 located at both sides of the inlet conveyor 10.

Each transfer device comprises a plurality of transfer fasteners 22, which rotate about a rotation axis A1 inclined with respect to the horizontal, typically at 45°. The rotative path includes an upper receiving region R1, at the uppermost region of such rotative path, and a lower delivery region R2 at the lowermost region of such rotative path.

The rotation of the transfer fasteners 22 about the inclined rotation axis A1 produces a change in the orientation of the transfer fasteners 22 between a lying orientation for receiving objects in the lying orientation when the transfer fasteners 22 are in the upper receiving region R1, and an upright orientation for delivering objects in the upright orientation when the transfer fasteners 22 are in the lower delivery region R1.

Each robotic collection device 11 includes a pick-up head 12 rotatable about a vertical axis A2 configured to collect the objects in the lying position from the inlet conveyor 10. The rotation of the pick-up head 12 allows the rotation of the retained objects along the vertical axis A2 to reach a predefined target direction, which is always the same, while maintaining the lying orientation.

After picking one object, each robotic collection device 11 transports the object to the upper receiving region R1 of the transfer device 20, where a transfer fastener 22 will be ready for receiving the object. Then, the pick-up head 12 releases the object which is attached to the transfer fastener 22.

According to the proposed invention, each transfer device 20 comprises several sectors 21 concentric with the same rotation axis A1, each sector 21 including at least one transfer fasteners 22 and being independently actuated by an actuator 24 capable to produce a variable non-constant rotational speed, enabling an independent control of the speed and position of each sector 22 of the same transfer device 20.

According to the preferred embodiment, each transfer fastener 20 includes three sectors 21, each including two different transfer fasteners 22 at different angular positions, but other alternatives are also possible, for example a transfer device 20 comprising between two and six sectors 21, each sector 21 comprising between one and four transfer fasteners 22.

The actuators 24 will be preferably configured to synchronize the position and/or speed of each transfer fastener 22 with the position and/or speed of the pick-up head 12 of said at least one robotic collection device 21 when in the upper receiving region R1 to maximize the output speed of the machine and/or with the position and/or speed of the at least one outlet conveyor 30 when in the lower delivery region R2, which typically will be a constant speed to delivery the objects uniformly spaced on the outlet conveyor 30.

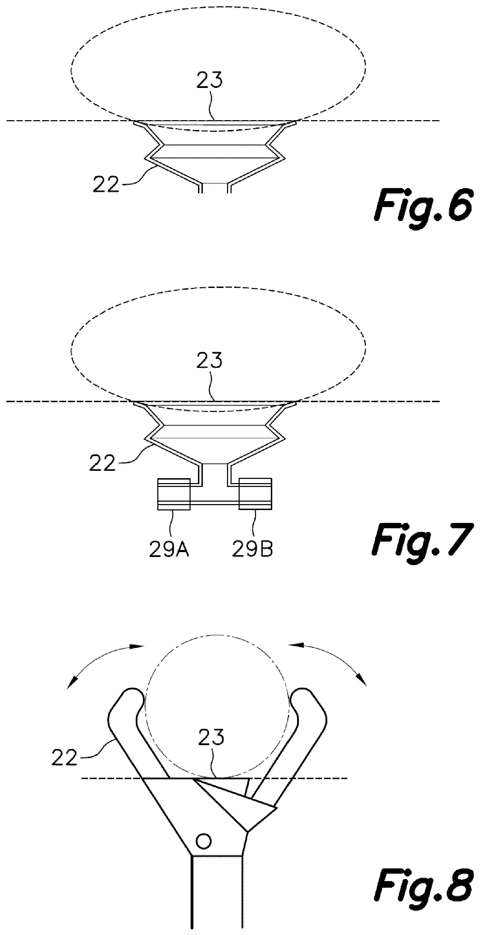

According to one embodiment, shown in Fig. 8, the transfer fasteners 22 and/or the pick-up heads 12 can be formed by at least two opposed grippers selectively movable towards and away from each other.

According to another embodiment, each transfer fastener 22 and/or each pick-up head 12 can includes at least vacuum cup, which is preferably elastically compressible, connected to a suction source 26 such an air pump, to produce a partial vacuum inside the vacuum cup to retain the object in contact with a mouth thereof.

Said connection will preferably remain uninterrupted from the upper receiving region R1 to the lower delivery region R2 and will be interrupted once reaching the lower delivery region R2 to release the objects on the outlet conveyor 30.

Alternatively, each transfer fastener 22 and/or each pick-up head 12 includes at least one elastically compressible vacuum cup which is not connected to a suction source 26, but is connected to a valve 29A, 29B configured to allow air to escape from inside the vacuum cup when there is air overpressure inside the vacuum cup, to prevent air from entering into the vacuum cup through the valve 29A, 29B when closed and to freely allow the entrance of air into the vacuum cup when open, the valve 29A, 29B being selectively open or closed. Said valve 29A, 29B can be a combination of single one-way valve 29A with a selectively openable valve 29B.

In any case, the vacuum cups may be releasably attached to the sector 21, for example through a tool-less connection such elastic grippers, sliders, velcro or magnets, and/or for example through few screws (typically four or less), allowing for an easy and fast replacement of the vacuum cups for maintenance or for changing its shape.

Typically, each vacuum cup includes a mouth surrounding a concavity where the partial vacuum is generated, said mouth defining a seat surface 23 where the objects come into contact, providing an approximately airtight seal of the concavity.

Similarly, the at least two opposed grippers of one transfer fastener 22 can include a seat surface 23 defined between the at least two opposed grippers and opposed to the access gap defined between the at least two opposed grippers. The objects come into contact with said seat surface 23 when introduced in the area defined between the opposed grippers.

In any case, said seat surface 23 of the transfer fasteners 22 is preferably horizontal ±10° when the corresponding transfer fastener 22 is in the lying orientation in the upper receiving region R1, and is preferably vertical ±10° when the corresponding transfer fastener 22 is in the upright orientation in the lower delivery region R2.

Also, said seat surface 23 is preferably tilted approximately 45° in regards a plane perpendicular to the rotation axis A1, typically between 35° and 55°.

According to alternative embodiments of the present invention, all the vacuum cups of the same transfer device 20 are preferably:
continuously connected to the same suction source 26 through a single shared suction chamber or through independent connection pipes; or
selectively connected to the suction source 26 through a shared suction chamber or through independent connection pipes, each connection including a valve 28' for selectively interrupting the connection with the suction source 26; or
each connected to one suction source 26 through independent connection pipes, or
each selectively connected to one suction source 26 through independent connection pipes, each connection including a valve for selectively interrupting the connection with the suction source 26, or each suction source including a switch to selectively stop each individual suction source 26.

According to one preferred embodiment of the above possibilities, the suction chamber 25 includes one annular opening 28, concentric with the rotation axis A1, for each sector 21 or for each transfer fastener 22. Each annular opening 28 includes one valve 28' selectively interrupting the connection with the suction source 24.

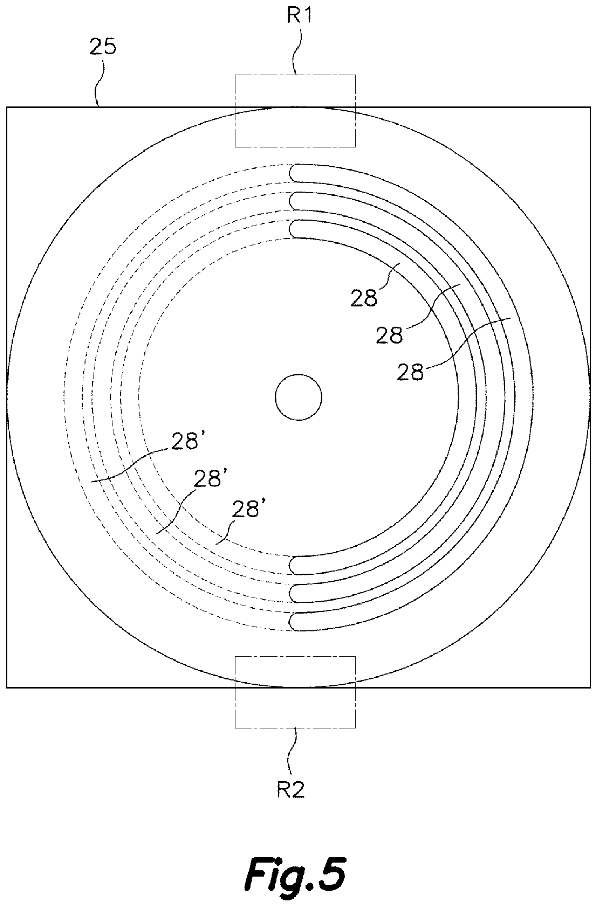

According to the embodiment shown in Fig. 5, the annular opening 28 only covers an angular portion of the entire circumference, extending from the upper receiving region R1 to the lower delivery region R2, the remaining angular portion of each annular opening 28 being occluded by a valve 28'. Said occlusions of the annular opening 28 produced by the valves 28' interrupts the connection with the suction chamber 25 when a sector 21 of the transfer device 20 is in an angular position coincident with the occluded portion of the annular opening 28.

The start and finish of each occlusion determines the angular position at which each individual transfer fasteners 22 connects with the suction source 26 allowing for the retention of an object thereon and interrupts such connection releasing the object.

According to another preferred embodiment of the above possibilities, each air duct connecting one transfer fastener 22 with the suction chamber, or each air pipe connecting one transfer fastener 22 with the suction source 26, includes one valve 28' which can be selectively actuated to open or close the connection of the correspondent transfer fastener 22 with the suction source 26. Such valve 28' can be electrically actuated, being therefore programable, or can be mechanically actuated through a cam so that the open and closed position thereof depends on the angular position of the sector 21 about the rotation axis R1.

According to one embodiment, the shared suction chamber 25 includes at least one annular openings 28 concentric with the rotation axis A1 and wherein at least one sector 21 of the transfer device 20 includes an air duct connecting each transfer fastener 22 thereof with the suction chamber 25 through the at least one annular openings 28.

Optionally, each sector 21 can include one annular cover 27, with a connection opening, covering one annular openings 28, the air duct connecting with the suction chamber 25 through the opening of the annular cover 27. These annular covers 27 increases the efficiency of the system reducing the required power of the suction source 26.

Preferably, each sector will include one independent air duct for each transfer fastener 22 thereof, allowing for an independent connection and disconnection of each transfer fastener 22 from the suction source 26.

According to the preferred embodiment, the suction chamber 25 includes one annular opening 28 for each sector 21, but other alternatives are also possible.

For example, the at least one sector 21 of the transfer device 20 has an air duct connecting each transfer fastener 22 thereof with the suction chamber 25 through a hollow central shaft of the sector 21 concentric with the rotation axis A1.

In this case, the air duct of each sector will be in fluid communication with said hollow central shaft which will be also in fluid communication with the suction source 26, for example through a rotative connection. One transfer device 20 can include several concentric hollow shafts, one for each sector 21 thereof, each hollow shaft being independently connected to the same suction source 26 or each being in fluid communication with a different suction source 26. Alternatively, the transfer fasteners 22 of different sectors 21 of the transfer device 20 can be all in fluid communication with the same hollow central shaft, in all but one of the sectors 21 said communication being produced through a rotative joint.

Each annular opening 28 can be interrupted along a portion thereof, blocking the connection with the suction chamber 25 for a portion of its perimeter, producing an interruption to the suction of the transfer fasteners when passing over such interrupted portion of the annular opening 28. Typically, such interruption will start at the lower delivery region R2, to produce the release of the objects, and will finish at the upper receiving region R1, where suction restarts to attach a new object delivered from the robotic collection device 11.

The actuators 24 can be configured to move the transfer fasteners 22 located in the upper receiving region R1 at a first speed higher than zero or at a first speed equal to zero for a period, and/or the actuators are configured to move the transfer fasteners 22 located in the lower delivery region R2 at a constant second speed, synchronized with the constant speed of the at least one outlet conveyor 30 adjacent thereto. Typically, the first speed is slower than the second speed because the reliably delivery of the objects from the robotic collection device requires slower speeds.

The actuators 24 can be further configured to move the transfer fasteners 22 between the upper receiving region R1 and the lower delivery region R2 and/or between the lower delivery region R2 and the upper receiving region R1 a third speed higher than the second speed to compensate for the slower first speed.

According to a preferred embodiment, the method of operation of the machine comprises the following steps:
During a receiving operation, the transfer device 20 positions one transfer fastener 22 of one sector 21 in the upper receiving region R1 and stops there while the robotic collection device 11 delivers one object, with the target direction and in the lying orientation, to said transfer fastener 22 located at the upper receiving region R1 which retains the object attached thereto.

When the transfer fasteners 22 are vacuum cups, the transfer fastener 22 located at the upper receiving region R1 will be connected to the suction source 26 and such connection will be maintained until such transfer fastener 22 reaches the lower delivery region R2.

When one sector 21 of the transfer device 20 includes several transfer fasteners 22, the receiving operation further comprises moving the sector 21 using acceleration and deceleration ramps to position and stop another transfer fastener 22 of the same sector 21 in the upper receiving region R1, repeating the delivery of an object by the robotic collection device 11.

Preferably, once the receiving operation has been completed, typically when all the transfer fastener 22 of the same sector 21 have been positioned in the upper receiving region R1, said sector 21 moves towards the lower delivery region R2 during a delivery operation using acceleration and deceleration ramps, while the preceding sector 21 of the transfer device 20 executes the receiving operation.

The delivery operation comprises reaching the lower delivery region R2 with one transfer fastener 22 of the sector 21, after completing the receiving operation, coordinating the speed of the transfer fastener 22 located at the lower delivery region R2 with the speed of the outlet conveyor 30, and releases the objects from the transfer fastener 22 located at the lower delivery region R2.

When one sector 21 of the transfer device 20 includes several transfer fasteners 22, the delivery operation further comprises moving the sector 21 at a constant speed positioning another transfer fastener 22 of the same sector 21 in the lower delivery region R2 releasing the object at that region, until all the transfer fasteners 22 of the same sector 21 have passed through the lower delivery region R2.

Then, once the delivery operation has been completed, typically when all the transfer fastener 22 of the same sector 21 have been moved through the lower delivery region R2, said sector 21 moves again towards the upper receiving region R1 during a reset operation using acceleration and deceleration ramps, while the following sector 21 of the transfer device 20 executes the delivery operation.

The reset operation comprises moving the sector 21 from the lower delivery region R1 towards the upper receiving region R1 using acceleration and deceleration ramps.

As soon as one sector has completed the receiving operation, the following sector 21 which is in the final portion of the reset operation executes the receiving operation, maximizing the output of the system. Similarly, as soon as one sector 21 completes the delivery operation the following sector 21, which has already started the delivery operation, executes the final portion of the delivery operation in which the sector moves the transfer fasteners 22 through the lower delivery region R2 at a constant speed, providing a constant flow of objects to the outlet conveyor 30.

All the sectors 21 rotate always in the same direction and are coordinate to prevent collisions between them.

Preferably, the delivery of objects to the outlet conveyor 30 is produced at a regular intervals. Occasionally, the delivery of objects from the robotic collection device 11 to the transfer fastener located at the upper receiving region R1 is delayed, jeopardizing the maintenance of the delivery at regular intervals.

In such cases, the sector 21 will finish the receiving operation and will initiate the delivery operation only with the transfer fasteners 22 already having objects attached thereto, and the folowing sector 21 will initiate prematurely the receiving operation, and both sectors 21 will coordinate their delivery operation to delivery objects to the outlet conveyor 30 at a regular intervals despite the presence of a transfer fastener 22 without an object attached thereto in one of the sectors, said transfer fastener 22 devoid of object not performing the delivery operation and moving away from the lower delivery region R2 at an accelerated speed to allow the following sector 21 to reach the lower delivery region R2 with a transfer fastener 22 carrying an object within the regular interval.

## Claims

1. A machine for automatically positioning objects, comprising:
at least one inlet conveyor (10) configured to transport a plurality of objects in a lying orientation;
at least one transfer device (20), each transfer device comprising a plurality of transfer fasteners (22), which rotate about a rotation axis (A1) inclined with respect to the horizontal, between an upper receiving region (R1) and a lower delivery region (R2), the rotation of the transfer fasteners (22) about the inclined rotation axis (A1) producing a change in the orientation of the transfer fasteners (22) between a lying orientation and an upright orientation;
at least one outlet conveyor (30) adjacent to the lower delivery region (R2) of the transfer device (20) for receiving the released objects in the upright position;
at least one robotic collection device (11) with a pick-up head (12) rotatable about a vertical axis (A2) and configured to collect the objects in the lying position from the inlet conveyor (10), to rotate the objects along the vertical axis (A2) to reach a target direction, and to deliver the object to a transfer fastener (20) located in the upper receiving region (R1);
**characterized in that**
each transfer device (20) comprises several sectors (21) concentric with the same rotation axis (A1), each sector (21) including at least one transfer fasteners (22) and being independently actuated by an actuator (24) capable to produce a variable non-constant rotational speed, enabling an independent control of the speed and position of each sector (22) of the same transfer device (20).

2. The machine according to claim 1 wherein the actuators (24) are configured to synchronize the position and/or speed of each transfer fastener (22) with the position and/or speed of the pick-up head (12) of said at least one robotic collection device (21) when in the upper receiving region (R1) and/or with the position and/or speed of the at least one outlet conveyor (30) when in the lower delivery region (R2).

3. The machine according to claim 1 or 2 wherein each transfer fastener (22) and/or each pick-up head (12) includes:
at least two opposed grippers selectively movable towards and away from each other;
at least one vacuum cup connected to a suction source (26), or
at least one elastically compressible vacuum cup connected to a valve (29A, 29B)) configured to allow air to escape from inside the vacuum cup when there is air overpressure inside the vacuum cup, to prevent air from entering into the vacuum cup through the valve (29A, 29B) when closed and to freely allow the entrance of air into the vacuum cup when open, the valve being selectively open or closed.

4. The machine according to claim 3 wherein a seat surface (23) defined on a mouth of each vacuum cup or defined on a bottom surface located between the at least two opposed grippers and opposed to the access gap defined between the at least two opposed grippers:
is horizontal ±10° when in the lying orientation in the upper receiving region (R1) and is vertical ±10° when in the upright orientation in the lower delivery region (R2); and/or
is tilted between 35° and 55° in regards a plane perpendicular to the rotation axis (A1).

5. The machine according to claim 3 or 4 wherein all the vacuum cups of the same transfer device (20) are:
continuously connected to the suction source (26) through a single shared suction chamber or through independent connection pipes, or
selectively connected to the suction source (26) through a shared suction chamber or through independent connection pipes, each connection including a valve (28') for selectively interrupting the connection with the suction source (26); or
each connected to one suction source (26) through independent connection pipes, or
each selectively connected to one suction source (26) through independent connection pipes, each connection including a valve for selectively interrupting the connection with the suction source (26), or each suction source including a switch to selectively stop each individual suction source (26).

6. The machine according to claim 5 wherein
the shared suction chamber (25) includes at least one annular openings (28) concentric with the rotation axis (A1) and wherein at least one sector (21) of the transfer device (20) includes an air duct connecting each transfer fastener (22) thereof with the suction chamber (25) through the at least one annular openings (28), each sector (21) optionally including one annular cover (27), with a connection opening, covering one annular openings (28), the air duct connecting with the suction chamber (25) through the opening of the annular cover (27); and/or wherein
at least one sector (21) of the transfer device (20) has an air duct connecting each transfer fastener (22) thereof with the suction chamber (25) through a hollow central shaft of the sector (21) concentric with the rotation axis (A1).

7. The machine according to any preceding claim wherein
the actuators (24) are configured to move the transfer fasteners (22) located in the upper receiving region (R1) at a first speed higher than zero or at a first speed equal to zero for a period; and/or
the actuators are configured to move the transfer fasteners (22) located in the lower delivery region (R2) at a constant second speed, synchronized with the constant speed of the at least one outlet conveyor (30) adjacent thereto.

8. The machine according to claim 7 wherein the actuators are configured to move the transfer fasteners (22) between the upper receiving region (R1) and the lower delivery region (R2) and/or between the lower delivery region (R2) and the upper receiving region (R1) a third speed higher than the second speed.

9. The machine according to any preceding claim wherein each sector (22) includes several transfer fasteners (22) at different angular positions regards the rotation axis (A1) for receiving multiple objects on the same sector (21).

10. The machine according to any preceding claim wherein the machine includes at least two transfer devices (20).

11. The machine according to claim 10 wherein the at least two transfer devices (20) include two transfer devices (20) located adjacent to successive portions of the inlet conveyor, each being feed by one robotic collection device (11) located above the portion of the inlet conveyor adjacent to the transfer device feed thereby.

12. The machine according to claim 10 or 11 wherein the machine includes two transfer devices (20) located at opposed lateral sides of the same inlet conveyor, and wherein both transfer devices are feed by the same robotic collection device (11) located above the inlet conveyor between the two transfer devices (20).

13. A method for automatically positioning objects, the method comprising:
providing a plurality of objects in a lying orientation on at least one inlet conveyor;
collecting the objects in the lying position from the inlet conveyor with a pick-up head of at least one robotic collection device and rotating the objects along a vertical axis to reach a target direction while maintaining the lying orientation;
delivering the objects with the target direction and the lying orientation to a transfer fastener located at an upper receiving region and attaching the objects to said transfer fastener;
changing the orientation of the objects attached to the transfer fasteners from the lying orientation to an upright orientation by rotating the transfer fastener about a rotation axis (A1) inclined with respect to the horizontal, between an upper receiving region (R1) and a lower delivery region (R2),
releasing the objects from the transfer fasteners in the upright orientation when reaching the lower delivering region (R2) to at least one outlet conveyor (30) adjacent to the lower delivery region (R1);
**characterized in that** the method comprises changing the orientation of the objects by:
independently rotating several transfer fasteners (22) concentric with the same rotation axis (A1) at a variable non-constant rotational speeds synchronizing the position and/or speed of each transfer fastener (22) with the position and/or speed of the pick-up head (12) of said at least one robotic collection device (11) when in the upper receiving region (R1) and/or with the position and/or speed of the at least one outlet conveyor (30) when in the lower delivery region (R2).

14. The method according to claim 13 wherein the method comprises:
moving the transfer fasteners (22) located in the upper receiving region (R1) at a first speed higher than zero or at a first speed equal to zero for a period; and simultaneously
moving the transfer fasteners (22) located in the lower delivery region (R2) at a constant second speed, synchronized with the constant speed of the at least one outlet conveyor (30) adjacent thereto.

15. The method according to claim 14 wherein the method further comprises moving the transfer fasteners (22) between the upper receiving region (R1) and the lower delivery region (R2) and/or between the lower delivery region (R2) and the upper receiving region (R1) a third speed higher than the second speed.
